# EUROPÄISCHE PATENTSCHRIFT

(11) **EP 1 573 229 B1**
(45) Veröffentlichungstag und Bekanntmachung des Hinweises auf die Patenterteilung: **16.12.2009**
(21) Anmeldenummer: 03767809.1
(22) Anmeldetag: 16.12.2003
(51) Int. Cl.: F16H 7/12

(54) **SPANNVORRICHTUNG FÜR EINEN ZUGMITTELTRIEB**
TENSIONING DEVICE FOR A TRACTION MECHANISM DRIVE
DISPOSITIF DE TENSION POUR UN ENTRAINEMENT A MOYEN DE TRACTION

(30) Priorität: 21.12.2002 DE 10260552; 31.03.2003 US 459211 P
(43) Veröffentlichungstag der Anmeldung: 14.09.2005
(73) Patentinhaber: Schaeffler KG, 91074 Herzogenaurach (DE)
(72) Erfinder: PFLUG, Rainer, 91560 Heilsbronn (DE); BAUMÜLLER, Rainer, 91074 Herzogenaurach (DE); HÄNSEL, Tino, 91448 Emskirchen (DE); JÄGER, Dietmar, 90579 Langenzenn (DE)
(86) Internationale Anmeldenummer: PCT/EP2003/014306
(87) Internationale Veröffentlichungsnummer: WO 2004/057212

(56) Entgegenhaltungen:
- EP-A- 0 456 142
- WO-A-99/47834
- WO-A-03/012317
- DE-A- 19 729 994
- US-A- 5 244 438

## Beschreibung

Die Erfindung bezieht sich auf eine Spannvorrichtung für einen Zugmitteltrieb, mit der ein Zugmittel, insbesondere ein Riemen vorgespannt werden kann. Derartige insbesondere für Brennkraftmaschinen bestimmte Zugmitteltriebe werden zum Antrieb unterschiedlicher Aggregate, wie: beispielsweise Generator, Wasserpumpe, Klimakompressor oder Lenkhilfspumpe eingesetzt.

Der Aufbau der Spannvorrichtung umfasst eine an einem Maschinenteil, beispielsweise dem Kurbelgehäuse einer Brennkraftmaschine, abgestützte Schildplatte, die mit einem rotationssymmetrisch ausgebildeten Tragkörper verbunden ist. In den Tragkörper ist ein verdrehbarer Einstellexzenter eingesetzt, der eine zur Symmetrieachse versetzte Bohrung aufweist, die zur Aufnahme einer Befestigungsschraube bestimmt ist. Der Tragkörper wird von einem Betriebsexzenter umschlossen, wobei zwischen diesen Bauteilen ein Drehlager vorgesehen ist, das eine in einen Ringspalt eingesetzte Gleitlagerbuchse umfasst. Das auf der Mantelfläche des Betriebsexzenters angeordnete Wälzlager wird außenseitig von einer Laufrolle umschlossen, die an dem Zugmittel geführt ist. Eine kraftschlüssige Abstützung der Spannrolle oder Laufrolle an dem Zugmittel stellt ein Federmittel sicher, welches zwischen der Schildplatte und dem Betriebsexzenter angeordnet ist. Zur Abstützung einer Axialkraft des Federmittels dient eine Axialscheibe, die zwischen der Stirnseite des Betriebsexzenters und einem mit dem Einstellexzenter verbundenen Bord oder Schulter eingesetzt ist.

### Hintergrund der Erfindung

Eine Spannvorrichtung der zuvor genannten Bauart ist aus dem US-Patent 5,244,438 bekannt. Diese Spannvorrichtung umfasst eine spanlos herstellbare Schildplatte, die einstückig mit dem Tragkörper verbunden ist. Stirnseitig an der vom Maschinenteil abgewandten Seite ist ein in die Aufnahme des Tragkörper eingesetzter weitestgehend scheibenförmig gestalteter Einstellexzenter abgestützt. Zur Erzielung eines lagerorientierten Einbaus der Bauteile Spannrolle, Einstellexzenter und Schildplatte ist ein separater Stift vorgesehen, der nach einer lageorientierten Ausrichtung dieser Bauteile, zur Fixierung in zueinander korrespondierende Bohrungen eingeführt werden kann. Für den Einstellexzenter der bekannten Spannvorrichtung ist im Anlieferzustand keine definierte Ausrichtung zwischen dem Einstellexzenter und dem Betriebsexzenter vorgesehen.

### Zusammenfassung der Erfindung

Der Erfindung liegt die Problemstellung zugrunde, für eine Spannvorrichtung der zuvor beschriebenen Bauart, eine Voreinstellung der Exzenter zueinander zu ermöglichen, die gleichzeitig eine Fehleinstellung der Spannvorrichtung vermeidet.

Erfindungsgemäß ist die Spannvorrichtung nach Anspruch 1 so aufgebaut, dass der Tragkörper an der Schildplatte formschlüssig gehalten und weiterhin der Einstellexzenter verdrehbar mit dem Tragkörper verbunden ist. Der Einstellexzenter weist einen Bord, einen scheibenartigen Abschluß auf, der einen Axialanschlag für den Betriebsexzenter bildet. Diese Maßnahme ermöglicht eine verliergesicherte Anordnung aller Einzelteile der Spannvorrichtung. Ein weiterer konstruktiver Aufbau der Spannvorrichtung umfasst eine Axialscheibe, die zwischen der Stirnseite des Betriebsexzenters und dem Bord des Einstellexzenters angeordnet ist. Die ein axiales Gleitlager bildende Axialscheibe ist verdrehgesichert mit einem Exzenter verbunden und ermöglicht eine verschleißfreie Relativbewegung und axiale Abstützung des Betriebsexzenters an dem Bord des Einstellexzenters.

Zur Vereinfachung der Einstellung umfasst die erfindungsgemäße Spannvorrichtung eine Justierung bzw. eine Transport- und/oder eine Verdrehsicherung zwischen dem Betriebsexzenter und dem Einstellexzenter im Anlieferzustand. Diese Einrichtung ist reibungsbegrenzt und damit drehmomentbegrenzt ausgeführt, wodurch die beiden Exzenter der Spannvorrichtung ohne ein separates Werkzeug, lagepositioniert sind. Diese Maßnahme ermöglicht eine gewünschte lageorientierte Anordnung des Betriebsexzenters gegenüber dem Arbeitsexzenter, ohne die Verwendung eines separaten Sicherungswerkzeugs im Anlieferzustand.

Weitere vorteilhafte Ausgestaltungen der Erfindung sind Gegenstand der abhängigen Ansprüche 2 bis 19.

In vorteilhafter Weise schließt die Erfindung eine Sicherung ein, mit der nach einer erfolgten Vormontage der Spannvorrichtung zur Endfixierung des Einstellexzenters dieser in nur eine Richtung verdrehbar ist. Diese Drehrichtungssperre verhindert wirksam eine Fehleinstellung die auftreten kann, wenn der Einstellexzenter entgegen der korrekten Drehrichtung eingestellt wird.

Eine vorteilhafte Ausgestaltung der Erfindung sieht eine an dem Betriebsexzenter lagefixierte, aus Kunststoff hergestellte Axialscheibe vor, die gleichzeitig eine Verdrehsicherung bildet. Dazu ist die Verdrehsicherung so gestaltet, dass bei einer Verdrehung des Einstellexzenters in der Betriebsfunktion sich die Verdrehsicherung elastisch verformt.

Die Axialscheibe ist vorteilhaft mit zumindest einer axial vorstehenden, elastisch verformbaren Erhebung versehen, welche in dem Anlieferzustand und während der Vormontage der Spannvorrichtung formschlüssig in eine Ausnehmung oder Aussparung des Einstellexzenters eingreift. Dazu eignet sich vorzugsweise eine Axialscheibe mit einer im Herstellungsprozeß der Kunststoff-Axialscheibe angespritzten Nase oder angespritzten Nocken, der bzw. die im eingebauten Zustand mit der Ausnehmung des Einstellexzenters korrespondiert. Die Nase bzw. der Nocken bewirken ein begrenztes Haltemoment, und stellen damit eine ungehinderte Betriebsfunktion der Spannvorrichtung sicher.

Eine weitere vorteilhafte Ausgestaltung der Axialscheibe, zur Bildung einer drehmomentbegrenzten Verdrehsicherung, sieht einen axial vorstehenden, einstückig mit der Axialscheibe verbundenen Stift vor, der beispielsweise formschlüssig in eine Bohrung des Einstellexzenters eingreift und der bei einer Verdrehung des Einstellexzenters gegenüber dem Betriebsexzenter und der damit verbundenen Axialscheibe abschert.

Weiterhin schließt die Erfindung eine Axialscheibe mit zumindest einer einseitig in die Ausnehmung des Einstellexzenters eingreifenden Verprägung ein, die ebenfalls eine wirksame reibungsbegrenzte bzw. drehmomentbegrenzte Verdrehsicherung ermöglicht. Die Verprägung stellt einen Widerstand bei einer Relativverdrehung des Einstellexzenters gegenüber dem Betriebsexzenter dar und sorgt für eine ausreichende Verdrehsicherung während des Transportes und der Montage. Vorzugsweise ist die Verprägung so gestaltet, dass sich diese nach einer Relativverdrehung der Exzenter zueinander elastisch verformt.

Für eine aus Kunststoff hergestellte Axialscheibe bietet es sich zur Darstellung einer Verdrehsicherung außerdem an, lokal einen wandstärkenreduzierten Bereich vorzusehen, der in Richtung des Einstellexzenters eine axial vorstehende, vorzugsweise halbkugelartig gewölbte Spritzhaut aufweist. Die Spritzhaut ist dazu so gestaltet und angeordnet, dass diese in der Einbaulage der Axialscheibe mit einer Bohrung des Betriebsexzenters übereinstimmt. Diese Lage ermöglicht eine starre Arretierung der Bauteile, Einstellexzenter, Axialscheibe und Betriebsexzenter und bei Bedarf auch die Schildplatte der Spannvorrichtung mittels eines separaten Werkzeuges, beispielsweise eines Stiftes. Dazu kann die Spritzhaut mit dem Stift durchstoßen und dann in die korrespondierenden Ausnehmungen bzw. Bohrungen der Bauteile eingeführt werden. Die Spritzhaut kann folglich eine Doppelfunktion ausüben, d.h. sowohl eine drehmomentbegrenzte Verdrehsicherung aufgrund der axial vorstehenden Spritzhaut als auch die Aufnahme des separaten Stiftes, mit dem eine starre Fixierung aller zueinander verdrehbaren Bauteile der Spannvorrichtung möglich ist.

Die übereinstimmend in den Bauteilen eingebrachten Bohrungen in Verbindung mit dem Stift ermöglichen beispielsweise, dass die vormontierte Spannvorrichtung vorgespannt von dem Hersteller der Spannvorrichtung ausgeliefert werden kann. Die Lage der Bohrungen des Einstellexzenters und des Betriebsexzenters gegenüber der Schildplatte kann dabei so gewählt werden, dass sich eine Extremstellung zwischen den Exzentern ergibt.

Die Kunststoff-Axialscheibe kann zur Erzielung einer wirksamen reibungsbegrenzten oder drehmomentbegrenzten Verdrehsicherung weiterhin einen verformbaren und oder abscherbaren Grad aufweisen, der bis zu einem definierten Reibmoment eine exakte Position der beiden Exzenter zueinander sicherstellt, bevor bei Überschreiten des Reibmomentes sich der Grad elastisch verformt oder abschert.

Die Erfindung sieht zur Realisierung der Verdrehsicherung außerdem eine Axialscheibe vor, die eine der Aussparung im Bord des Einstellexzenters entsprechend geometrisch ausgebildete Kunststoff-Spritznaht aufweist. Die gepunktet mit der Axialscheibe verbundene Spritznaht bildet Sollbruchstellen die bei einer Relativverdrehung des Einstellexzenters zu der Axialscheibe nach Überwindung des Reibmoments bzw. einer Haltekraft abscheren.

Eine weitere wirksame Verdrehsicherung ist gemäß der Erfindung realisierbar mittels einer Axialscheibe, die zumindest eine radial nach außen gerichtete Lasche umfasst, welche abgewinkelt, formschlüssig in die Aussparung des Einstellexzenters eingreift. Vorzugsweise bietet es sich dazu an, dass die konzentrisch zu dem Bord angeordnete Lasche bei Überschreiten einer definierten Haltekraft bzw. eines durch die Festigkeit der Lasche bestimmten Reibmoments sich radial nach außen verformt oder abschert.

Die Erfindung schließt weiterhin eine axiale Scheibe ein, die zumindest im Bereich des Außenumfangs eine elastische Nase aufweist, die an einer Wandung der Ausnehmung des Einstellexzenters verrastet. Bei Überschreiten der Haltekraft der Nase weicht diese radial aus und ermöglicht damit eine Relativbewegung des Einstellexzenters gegenüber der Axialscheibe bzw. des zugehörigen Einstellexzenters. Eine Alternative schließt eine Nase mit einer Sollbruchstelle ein, die nach Überschreiten der Haltekraft abschert.

Als eine weitere Verdrehsicherung eignet sich eine Axialscheibe, die partiell einen abgewinkelten Schenkel umfasst, der schräg in Richtung der Drehachse der Axialscheibe ausgerichtet ist. Diese Schenkellage ermöglicht bei einer Drehrichtung des Einstellexzenters in die Endlage eine gewollte Umformung des Schenkels, wodurch sich die Verdrehsicherung löst.

Eine wirksame reibungsbegrenzte Verdrehsicherung ist gemäß der Erfindung weiterhin unmittelbar zwischen dem Einstellexzenter und dem Betriebsexzenter realisierbar. Dazu eignet sich beispielsweise ein Siegellackpunkt, der am Betriebsexzenter angeordnet, im vormontierten Zustand in eine dazu vorgesehene Aussparung des Einstellexzenters eingreift.

Die Erfindung schließt ebenfalls eine Umkehrung ein, d.h. einen an dem Einstellexzenter angeordneten Siegellackpunkt, der in eine Aussparung des Betriebsexzenters verrastet. Unabhängig von der Lage, besitzt der Siegellackpunkt eine Haftkraft, die eine ungehinderte Einstellung des Einstellexzenters ermöglicht.

Vorteilhaft schließt die Erfindung außerdem eine Verdrehsicherung zwischen dem Einstellexzenter und dem Tragkörper ein, die an dem zur Schildplatte gerichteten Ende vorgesehen ist. Dazu kann als Verdrehsicherung ein geeigneter eine definierte Haltekraft aufweisender Klebstoff, Siegellack oder ein beliebig anderes Haltemittel eingesetzt werden.

Eine weiter Ausgestaltung der Erfindung sieht vor, dass die Axialscheibe eine Doppelfunktion ausübt. Neben einer reibungsbegrenzten Verdrehsicherung zwischen dem Einstellexzenter und dem Betriebsexzenter gemäß den zuvor erläuterten Ausführungsbeispielen, kann die Axialscheibe mit einer Drehrichtungssperre versehen werden. Diese Sperre ist so ausgeführt, dass der Einstellexzenter gegenüber dem Betriebsexzenter in nur einer Richtung verdrehbar ist, um eine Fehleinstellung der Spannvorrichtung bei der Montage zu unterbinden. Dazu eignet sich insbesondere ein axial vorstehender Stift, der einer Ausnehmung in dem Bord des Einstellexzenters zugeordnet ist Die Ausnehmung erstreckt sich dabei über einen Winkel, der den maximalen Verstellwinkel des Einstellexzenters übertrifft. Der starre Stift ist dabei in einer Zone plaziert wodurch dieser die Verstellung, den Verstellbereich, des Einstellexzenters nicht behindert. Alternativ bietet es sich an, den Stift stirnseitig in dem Betriebsexzenter anzuordnen, der durch eine Bohrung der Axialscheibe in die Ausnehmung des Einstellexzenters eingreift.

Die erfindungsgemäße Spannvorrichtung schließt weiterhin einen speziell gestalteten Winkelring ein, über den sich die Torsionsfeder mit einem Federende an der Schildplatte abstützt. Der aus Kunststoff hergestellte Winkelring greift mit einem radial ausgerichteten Flansch in eine axial vorstehende Stufe der Schildplatte ein. An dem Flansch schließt sich ein zylindrischer Hülsenabschnitt an, der außenseitig von der Windungen der Torsionsfeder umschlossen ist. An dem von der Schildplatte abgewandten Ende ist der Winkelring mit einer Scheibe verbunden, die innenseitig auf dem Tragkörper zentriert ist und die unter Einhaltung eines radialen Dichtspaltes bis an eine Stirnseite des Betriebsexzenters geführt ist. Auf der zum Betriebsexzenter weisenden Seite ist die Scheibe mit symmetrisch umfangsverteilt angeordneten, axial ausgerichteten sacklochartigen Ausnehmungen versehen.

### Kurze Beschreibung der Zeichnungen

Neun Figuren, die unterschiedliche Ausführungsbeispiele der Erfindung darstellen, werden nachfolgend erläutert. Es zeigen:
- Figur 1: in einem Längsschnitt den Aufbau der erfindungsgemäßen Spannvorrichtung;
- Figur 2: in einer Perspektive, die erfindungsgemäße Spannvorrichtung, die den Aufbau einer erfindungsgemäßen drehmomentbegrenzten bzw. reibungsbegrenzten Verdrehsicherung dargestellt;
- Figur 3: eine zur Figur 2 alternativ gestaltete Verdrehsicherung;
- Figur 4: eine Verdrehsicherung, bei der die Axialscheibe lokal eine axial vorstehende Verprägung aufweist, die in eine Ausnehmung von dem Bord des Einstellexzenters eingreift;
- Figur 5: eine Verdrehsicherung unmittelbar zwischen dem Betriebsexzenter und dem Einstellexzenter;
- Figur 6: eine Axialscheibe, die zur Bildung einer Verdrehsicherung lokal eine wandstärkenreduzierte axial vorstehende Spritzhaut bildet, die durch einen Stift, zur Voreinstellung durchstoßen werden kann und die bei einer Verdrehung des Einstellexzenters gegenüber dem Betriebsexzenter elastisch verformbar ist;
- Figur 7: einen vergrößerten Ausschnitt einer Spannvorrichtung, deren Verdrehsicherung gebildet ist durch eine am Außenumfang der Axialscheibe vorgesehene Lasche, die mit einem axial vorspringenden Schenkel in die Ausnehmung des Einstellexzenters eingreift;
- Figur 8: eine Kunststoff-Spritznaht, die stirnseitig der Ausnehmung von dem Bord des Einstellexzenters angepasst ist und die eine Verdrehsicherung bildet;
- Figur 9: einen Ausschnitt einer Spannvorrichtung, die eine Verdrehsicherung sowie eine Drehrichtungssperre umfasst.

### Detaillierte Beschreibung der Zeichnungen

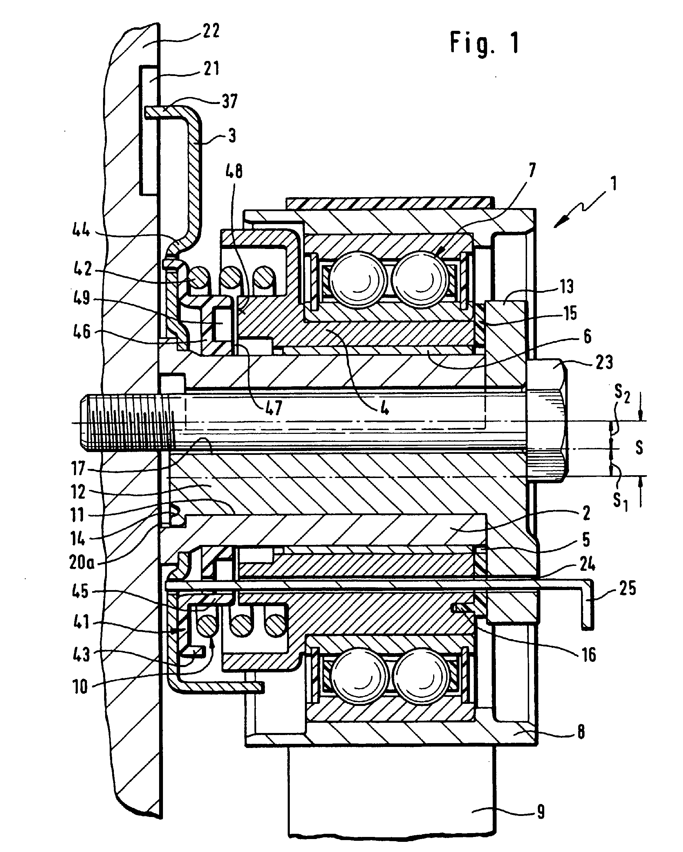

Der Längsschnitt gemäß Figur 1 verdeutlicht den Aufbau einer erfindungsgemäßen Spannvorrichtung 1. Die Spannvorrichtung 1 umfasst einen rotationssymmetrisch gestalteten Tragkörper 2, der formschlüssig mit einer Schildplatte 3 verbunden ist. Der rohrförmige Tragkörper 2 ist umschlossen von einem Betriebsexzenter 4, wobei in einem Ringspalt 5 eine Gleitlagerbuchse 6 eingesetzt ist, zur Erzielung einer verschleißfreien Relativbewegung des Betriebsexzenters 4 gegenüber dem Tragkörper 2. Außenseitig, an einem radial gestuften Abschnitt dient der Betriebsexzenter 4 zur Aufnahme eines Wälzlagers 7, das wiederum von einer Laufrolle 8 umschlossen ist, die an einem Zugmittel 9, insbesondere einem Riemen abgestützt ist. Zur kraftschlüssigen Abstützung der Laufrolle 8 an dem Zugmittel 9 ist eine zwischen der Schildplatte 3 und dem Betriebsexzenter 4 eingesetzte Torsionsfeder 10 vorgesehen. Eine Längsbohrung 11 des Tragkörpers 2 dient zur Aufnahme eines Einstellexzenters 12, der an dem von der Schildplatte 3 abgewandten Ende einstückig mit einem Bord 13 versehen ist. Mittels einer Verprägung 14 ist der Einstellexzenter 12 fixiert, jedoch gleichzeitig verdrehbar gegenüber dem Tragkörper 2 angeordnet. Zwischen einer Stirnseite des Betriebsexzenters 4 und dem Bord 13 des Einstellexzenters 12 ist eine Axialscheibe 15 angeordnet, die über einen Stift 16 an dem Betriebsexzenter 4 lagefixiert ist. Zur Erzielung einer Lagefixierung der Schildplatte 3 gegenüber dem Maschinenteil 22 dient eine rechtwinkelig abgekantete Lasche 37 der Schildplatte 3, die in eine Aussparung 21 des Maschinenteils 22 eingreift.

Der Einstellexzenter 12 ist weiterhin mit einer außermittig angeordneten Bohrung 17 versehen, die zur Aufnahme einer Befestigungsschraube 23 dient, mit der die gesamte Spannvorrichtung 1 an einem Maschinenteil 22 befestigt ist. Die Figur 1 zeigt die Spannvorrichtung 1 in einer Extremstellung, bei der die Bohrung 17 des Einstellexzenters 12 gegenüber dem Betriebsexzenter 4 zur Erzielung einer maximalen Exzentrizität "S" eingestellt sind, die gleichzeitig den größtmöglichen Verstellbereich der Spannvorrichtung 1 definiert. Die Exzentrizität "S" definiert den maximalen Abstand zwischen der Symmetrieachse der Laufrolle 8 und der Längsachse der Befestigungsschraube 23. Die max. Exzentrizität "S" bildet die Summe aus der Exzentrizität "S₁" des Betriebsexzenters 4 und der Exzentrizität "S₂" des Einstellexzenters 12. Dabei kann die Exzentrizität "S" dem doppelten Wert der Exzentrizität "S₁", entsprechend die ein Maß zwischen den Symmetrieachsen der Laufrolle 8 und des Tragkörpers 2 definiert.

Zur Montagevereinfachung und zur Transportsicherung ist die Spannvorrichtung 1 mit einer Verdrehsicherung versehen, die eine lageorientierte Anordnung des Betriebsexzenters 4 gegenüber dem Einstellexzenter 12 gewährleistet. Die eine reibungs- bzw. drehmomentbegrenzte Fixierung bildende Verdrehsicherung vereinfacht die Einstellung der Spannvorrichtung 1, bzw. die Montage des Zugmittels 9.

Gemäß der Erfindung sind unterschiedlich gestaltete Verdrehsicherungen realisierbar, die in der nachfolgenden Beschreibung erläutert werden.

In Figur 1 ist die Spannvorrichtung 1 mit der Verdrehsicherung 20a dargestellt. Diese Verdrehsicherung 20a gewährleistet eine reibungs- bzw. drehmomentbegrenzte Fixierung zwischen dem Einstellexzenter 12 und dem Tragkörper 2. Dazu sind diese Bauteile mittels eines geeigneten Haltemittel, eines Klebstoffs, z. B. einem Siegellack, auf der dem Maschinenteil 22 zugewandten Seite verbunden. Das Haltemittel verfügt über eine Haltekraft, die bis zu einem definierten Drehmoment die Lagepositionierung dieser Bauteile sichert. Die Spannvorrichtung 1 umfasst weiterhin einen Stift 25, der in eine Bohrung 24 des Einstellexzenters 12 eingesetzt ist. Gemäß Figur 1 korrespondiert die Bohrung 24 mit Bohrungen in der Axialscheibe 15, dem Betriebsexzenter 4 sowie der Schildplatte 3. Der Stift 25 ermöglicht die komplettierte Spannvorrichtung 1 vorgespannt, d. h. in einer Extremstellung des Betriebsexzenters 4 gegenüber dem Einstellexzenter 12 an den Kunden zu liefern.

Die Spannvorrichtung 1 schließt weiterhin einen speziell gestalteten Winkelring 41 ein, über den sich die Torsionsfeder 10 mit einem Federende 42 an der Schildplatte 3 abstützt. Der aus Kunststoff hergestellte Winkelring 41 greift in der Einbaulage mit einem kreisringförmig gestalteten, radial ausgerichteten Flansch 43 in eine axial vorstehende Stufe 44 der Schildplatte 3. Der Flansch 43ist innenseitig mit einem zylindrischen Hülsenabschnitt 45 versehen, der außenseitig von Windungen der Torsionsfeder 10 umschlossen ist. An dem von der Schildplatte 3 abgewandten Ende ist der Winkelring 41 einstückig mit einer dickwandigen Scheibe 46 verbunden, die innenseitig auf dem Tragkörper 2 zentriert ist, und die unter Einhaltung eines radialen Dichtspaltes 47 bis an eine Stirnseite 48 des Betriebsexzenters 4 geführt ist. Auf der zum Betriebsexzenter 4 weisenden Seite ist die Scheibe 46 mit symmetrisch umfangsverteilt angeordneten, axial ausgerichteten sacklochartigen Ausnehmungen 49 versehen.

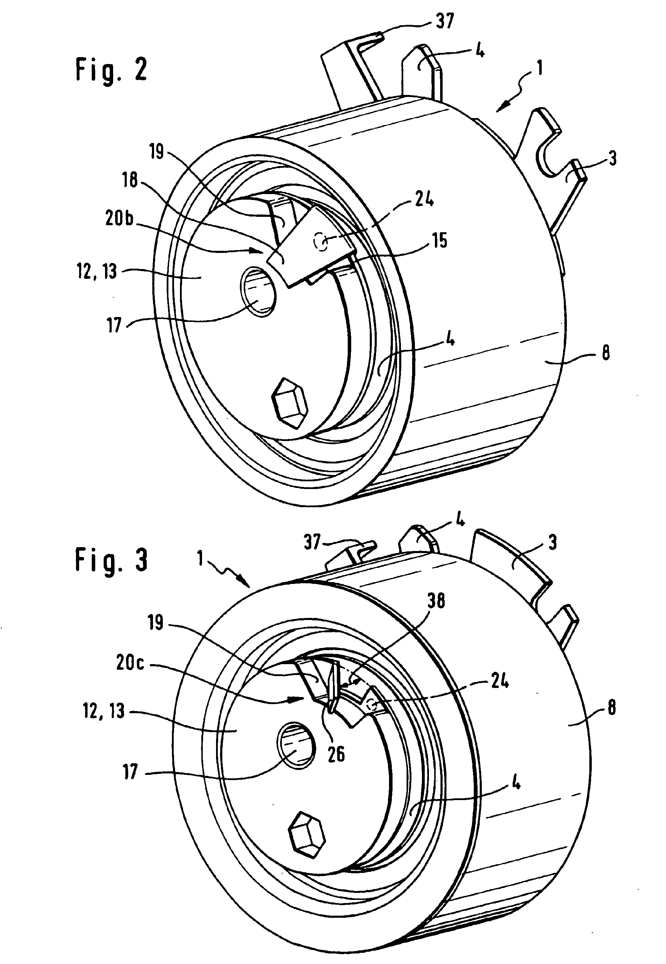

Die Figur 2 zeigt eine Verdrehsicherung 20b, mit der im vormontierten Zustand, dem Anlieferzustand der Spannvorrichtung 1, der Betriebsexzenter 4 gegenüber dem Einstellexzenter 12 lagepositioniert ist. Zur Realisierung dieser Verdrehsicherung 20b ist wie in Figur 1 abgebildet, die am Betriebsexzenter 4 lagefixierte Axialscheibe 15 am Außenumfang mit einer nach innen schräg gerichteten Lasche 18 versehen, die in eine Ausnehmung 19 des einstückig mit dem Einstellexzenter 12 verbundenen Bord 13 eingreift. Die Verdrehsicherung 20b gewährleistet im Anlieferzustand eine lageorientierte Ausrichtung des Einstellexzenters 12 gegenüber dem Betriebsexzenter 4. Während der Montage wird, nachdem die Spannvorrichtung 1 mit der Befestigungsschraube 23 lose am Maschinenteil 22 befestigt ist, die Verdrehsicherung 20b durch Hochschwenken der Lasche 18 gelöst. Damit ist eine unter der Lasche 18 angeordnete Bohrung 24 zugänglich, in die während der Montage ein Stift 25 eingefügt werden kann, mit dem für eine Grundeinstellung die Bauteile Betriebsexzenter 4, Axialscheibe 15 sowie der Bord 13 und der damit in Verbindung stehende Einstellexzenter 12 starr verbunden sind.

Die Figur 3 zeigt die Spannvorrichtung 1, versehen mit einer alternativ gestalteten Verdrehsicherung 20c. Diese wird gebildet durch einen aus der Axialscheibe 15 gebildeten ausgestanzten Schenkel 26, der unter einem Winkel 38 schräg gerichtet in die Ausnehmung 19 des Bordes 13 ragt und damit im Anlieferzustand eine wirksame Lageposition des Bordes 13 von dem Einstellexzenter 12 gegenüber dem Betriebsexzenter 4 sicherstellt.

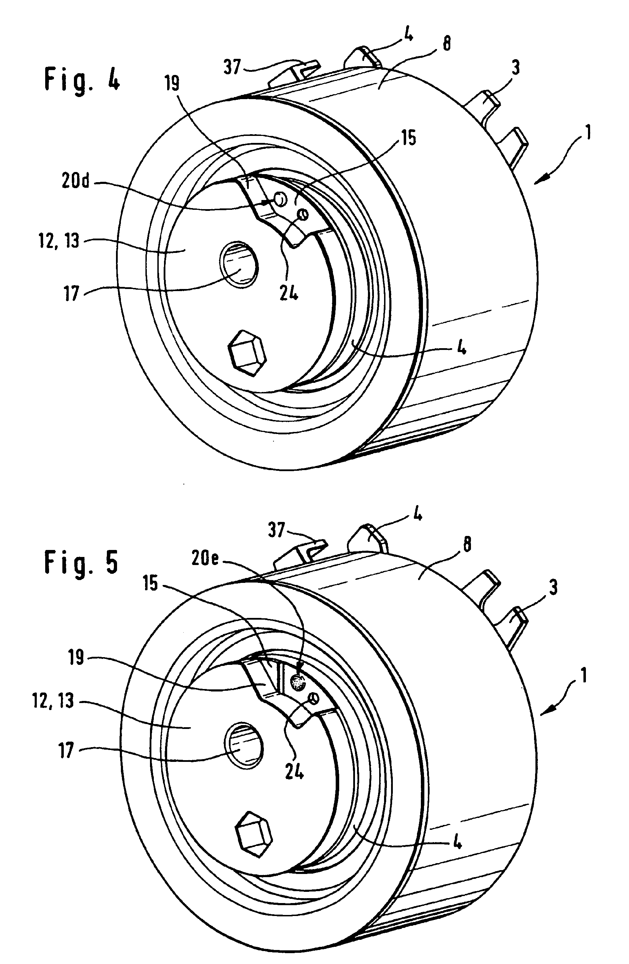

In Figur 4 ist die Verdrehsicherung 20d in Verbindung mit der Spannvorrichtung 1 abgebildet. Dabei ist die Axialscheibe 15 mit einer örtlich axial in die Ausnehmung 19 des Bordes 13 ausgerichteten, versetzt zur Bohrung 24 angeordneten Verprägung versehen, die bei einer Verdrehung bzw. Einstellung vom Bord 13 elastisch verformbar ist und damit eine reibungs- bzw. drehmomentbegrenzte Verdrehsicherung 20d bildet.

Die Figur 5 zeigt eine unmittelbar zwischen dem Betriebsexzenter 4 und dem Bord 13 und damit dem Einstellexzenter 12 angeordnete Verdrehsicherung 20e. Dazu ist an der Stirnseite des Betriebsexzenters 4 lokal ein Siegellackpunkt bzw. ein geeigneter weiterer vorstehender Nocken oder Haltemittel angeordnet mit einer begrenzten Haftkraft, so dass bei einer Einstellung bzw. Verdrehung des Einstellexzenters 12 dieser abschert und eine ungehinderte Einstellung ermöglicht.

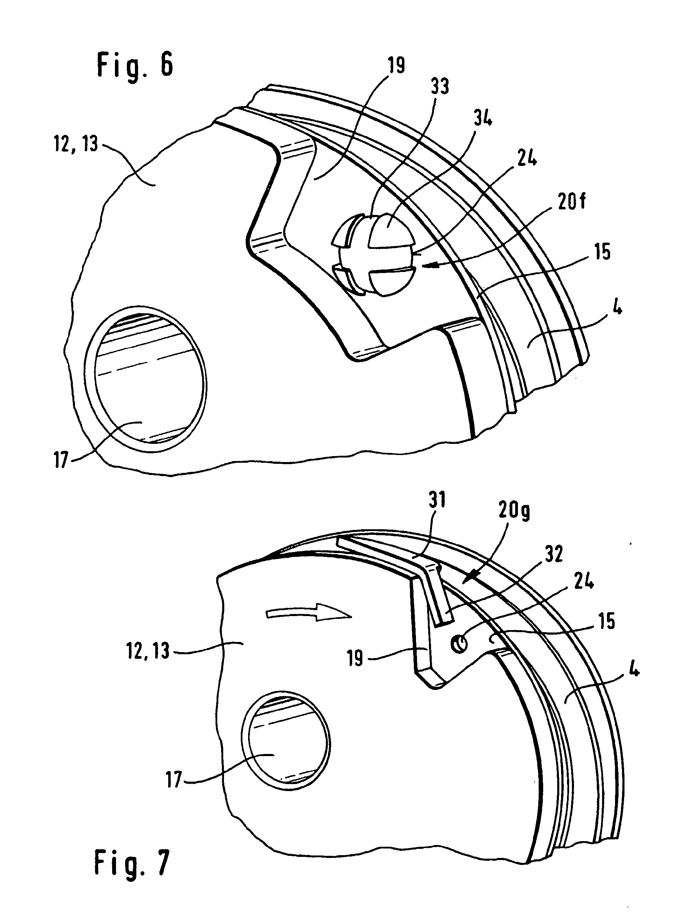

Die Verdrehsicherung 20f gemäß Figur 6 ist übereinstimmend mit der Bohrung 24 an der Axialscheibe 15 angeordnet. Dazu weist die Axialscheibe 15 eine wandstärkenreduzierte halbkugelförmig gestaltete Spritzhaut 33 auf, welche außenseitig mit symmetrisch zueinander beabstandeten Kugelsegmenten 34 umschlossen ist. Die Gestaltung der Verdrehsicherung 20f ermöglicht ein Einführen des Stiftes 25 zur starren Lagepositionierung des Betriebsexzenters 4 gegenüber dem Einstellexzenter 12. Außerdem ist die Spritzhaut 33 in Verbindung mit den Kugelsegmenten 34 so gestaltet, dass diese bei einer Verdrehung des Bordes 13 gegenüber der Axialscheibe 15 elastisch verformbar sind.

In Figur 7 ist ein Ausschnitt der Spannvorrichtung 1 abgebildet, der insbesondere die Gestaltung der Verdrehsicherung 20g verdeutlicht. Dazu ist die Axialscheibe 15 am Außenumfang partiell mit einem axial vorstehenden Ansatz 31 versehen, der am freien Ende einen radial schräg nach innen gerichteten Schenkel 32 bildet, welcher in die Ausnehmung 19 des Bordes 13 eingreift.

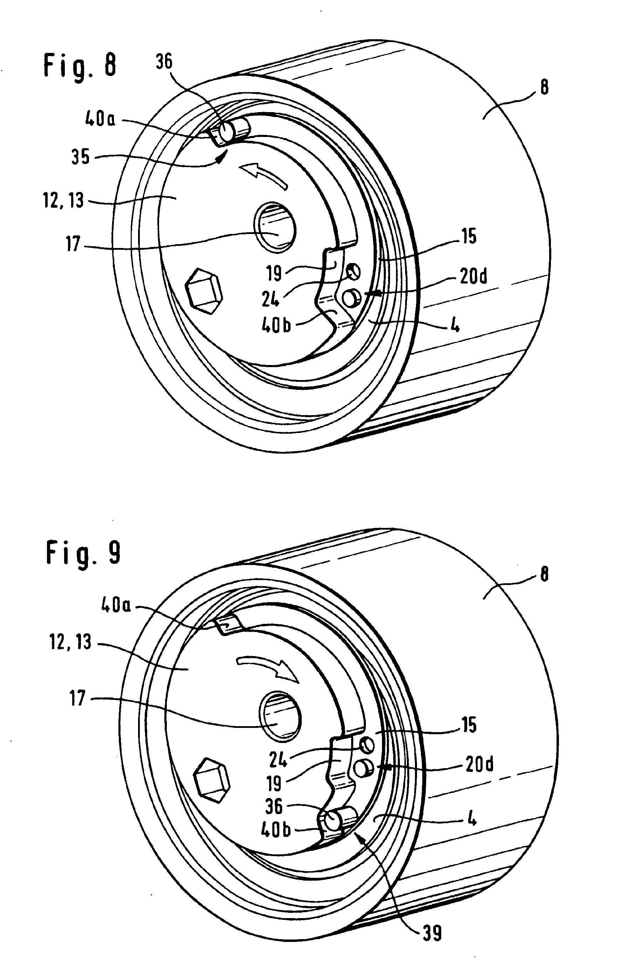

Die Figur 8 zeigt ausschnittsweise die Spannvorrichtung 1, die zusätzlich zu der Verdrehsicherung 20d eine Drehrichtungssperre 35 aufweist. Die Drehrichtungssperre 35 verhindert eine Verdrehung des Einstellexzenters 12 im Uhrzeigersinn und damit eine Fehleinstellung der Spannvorrichtung 1. Als Drehrichtungssperre 35 dient ein axial vorstehender, an der Axialscheibe 15 befestigter Stift 36 oder alternativ ein im Betriebsexzenter 4 eingesetzter Stift, der durch eine entsprechende Bohrung der Axialscheibe 15 hervortritt. Die Drehrichtungssperre 35 stellt ein Sicherheitsmerkmal dar, das eine Fehleinstellung vermeidet und damit einen wirksamen Schutz vor einer Fehlfunktion der Spannvorrichtung 1 gewährleistet.

Alternativ zu Figur 8 ist in Figur 9 die Spannvorrichtung 1 mit einer Drehrichtungssperre 39 versehen, die Fehleinstellung im Gegenuhrzeigersinn verhindert. Diese Drehrichtungssperre 39 ist vom Bauteileumfang vergleichbar mit der Drehrichtungssperre 35. Der Ansatz 36 greift in die Ausnehmung 19 des Einstellexzenters 12 ein, wobei die maximale Verdrehung des Einstellexzenters 12 gegenüber dem Betriebsexzenter 4 von Anschlägen 40a, 40b der Ausnehmung 19 begrenzt ist.

### Bezugszahlenliste

- 1: Spannvorrichtung
- 2: Tragkörper
- 3: Schildplatte
- 4: Betriebsexzenter
- 5: Ringspalt
- 6: Gleitlagerbuchse
- 7: Wälzlager
- 8: Laufrolle
- 9: Zugmittel
- 10: Torsionsfeder
- 11: Längsbohrung
- 12: Einstellexzenter
- 13: Bord
- 14: Verprägung
- 15: Axialscheibe
- 16: Stift
- 17: Bohrung
- 18: Lasche
- 19: Ausnehmung
- 20a: Verdrehsicherung
- 20b: Verdrehsicherung
- 20c: Verdrehsicherung
- 20d: Verdrehsicherung
- 20e: Verdrehsicherung
- 20f: Verdrehsicherung
- 20g: Verdrehsicherung
- 21: Aussparung
- 22: Maschinenteil
- 23: Befestigungsschraube
- 24: Bohrung
- 25: Stift
- 26: Schenkel

- 27: Kerbe
- 28: Zeiger
- 29: Hakenschlüssel
- 30a: Bohrung
- 30b: Bohrung
- 31: Ansatz
- 32: Schenkel
- 33: Spritzhaut
- 34: Kugelsegment
- 35: Drehrichtungssperre
- 36: Ansatz
- 37: Ansatz
- 38: Winkel
- 39: Drehrichtungssperre
- 40a: Anschlag
- 40b: Anschlag
- 41: Winkelring
- 42: Federende
- 43: Flansch
- 44: Stufe
- 45: Hülsenabschnitt
- 46: Scheibe
- 47: Dichtspalt
- 48: Stirnseite
- 49: Ausnehmung
- S: max. Exzentrizität
- S₁: Exzentrizität des Betriebsexzenters
- S₂: Exzentrizität des Einstellexzenters

## Patentansprüche

1. Spannvorrichtung für einen Zugmitteltrieb, mit dem ein Zugmittel (9) , insbesondere ein Riemen, vorgespannt werden kann, dabei umfasst die Spannvorrichtung (1):
- eine an einem Maschinenteil (22) abgestützte Schildplatte (3), die einen rotationssymmetrischen Tragkörper (2) bildet;
- einen einstellbar, in den hohlzylindrisch gestalteten Tragkörper (2) eingesetzten Einstellexzenter (12), der eine zu einer Symmetrieachse versetzte, zur Aufnahme einer Befestigungsschraube (23) bestimmte Bohrung aufweist;
- einen den Tragkörper (2) umschließenden Betriebsexzenter (4), wobei diese Bauteile über eine Gleitlagerbuchse (6) relativ zueinander verdrehbar sind;
- ein auf einer Mantelfläche des Betriebsexzenters (4) angeordnetes Wälzlager (7), das außenseitig von einer Laufrolle (8) umschlossen ist, an der das Zugmittel (9) geführt ist wenn das Zugmittel (9) vorgespannt wird
- ein Federmittel, ausgeführt als eine Torsionsfeder (10), das zwischen der Schildplatte (3) und dem Betriebsexzenter (4) angeordnet, eine kraftschlüssige Abstützung der Laufrolle (8) an dem Zugmittel (9) sicherstellt wenn das Zugmittel (9) vorgespannt wird, **dadurch gekennzeichnet, dass**
- der Tragkörper (2) an der Schildplatte (3) formschlüssig fixiert ist und der Einstellexzenter (12) verdrehbar an dem Tragkörper (2) befestigt ist;
- zwischen der von der Torsionsfeder (10) abgewandten Stirnseite des Betriebsexzenters (4) und einem mit dem Einstellexzenter (12) verbundenen Bord (13) eine Axialscheibe (15) eingesetzt ist, welche mit einem Exzenter drehstarr verbunden ist;
- die Spannvorrichtung (1) eine Verdrehsicherung (20a - 20g) aufweist, mit der in einem Anlieferzustand der Spannvorrichtung (1) der Betriebsexzenter (4) gegenüber dem Einstellexzenter (12) reibungsbegrenzt bzw. drehmomentbegrenzt lagepositioniert ist.

2. Spannvorrichtung nach Anspruch 1, die mit einer Drehrichtungssperre (35, 39) versehen ist, welche eine Verdrehung des Einstellexzenters (12) in nur einer Richtung ermöglicht.

3. Spannvorrichtung nach Anspruch 1, wobei die zwischen dem Betriebsexzenter (4) und dem Einstellexzenter (12) eingesetzte, an dem Betriebsexzenter (4) lagefixierte, aus Kunststoff hergestellte Axialscheibe (15) eine Verdrehsicherung (20a - 20g) bildet, die bei einer Verdrehung des Einstellexzenters (12) elastisch verformbar ausgebildet ist.

4. Spannvorrichtung nach Anspruch 3, wobei die Axialscheibe (15) zumindest eine vorstehende, elastisch verformbare Erhebung aufweist, die im Anlieferzustand der Spannvorrichtung (1) in eine Ausnehmung (19) des Bordes (13) von dem Einstellexzenter (12) eingreift.

5. Spannvorrichtung nach Anspruch 3, wobei die Axialscheibe (15) zumindest eine angespritzte Nase oder einen angespritzten Nocken aufweist, die bzw. der mit der Ausnehmung (19) des Einstellexzenters (12) bzw. mit dessen Bord (13) zusammenwirkt.

6. Spannvorrichtung nach Anspruch 3, wobei zumindest ein axialer Stift der Axialscheibe (15) in die Ausnehmung (19) des Bordes (13) oder in eine Bohrung des Einstellexzenters (12) eingepasst ist, der bei einer Relativverdrehung des Einstellzylinders (12) gegenüber dem Betriebsexzenter (4) abschert.

7. Spannvorrichtung nach Anspruch 3, wobei die Axialscheibe (15) zur Bildung der Verdrehsicherung (20d) zumindest eine einseitige, in die Ausnehmung (19) des Einstellzylinders (12) eingreifende Verprägung (14) aufweist.

8. Spannvorrichtung nach Anspruch 3, deren Axialscheibe (15) zur Bildung der Verdrehsicherung (20f) zumindest eine wandstärkenreduzierte axial, vorstehende Spritzhaut (33) aufweist, welche in die Ausnehmung (19) des Bordes (13) eingreift.

9. Spannvorrichtung nach Anspruch 8, wobei die Spritzhaut (33) der Verdrehsicherung (20f) mit einer Bohrung des Betriebsexzenters (4) übereinstimmt und die Lage der Bohrungen eine Zentrierung der Bauteile Einstellexzenter (12) und Betriebsexzenter (4) mittels eines separaten Werkzeuges ermöglicht.

10. Spannvorrichtung nach Anspruch 3, wobei die Axialscheibe (15) als Verdrehsicherung einen verformbaren und/oder abscherbaren Grad aufweist, der bis zu einem definierten Reibmoment bzw. Drehmoment die Lageposition des Betriebsexzenters (4) gegenüber dem Einstellexzenter (12) sicherstellt.

11. Spannvorrichtung nach Anspruch 3, die zur Bildung der Verdrehsicherung eine Axialscheibe (15) einschließt, die eine der Ausnehmung (19) des Einstellexzenters (12) entsprechend geometrisch gestaltete Spritznaht aufweist, welche gepunktet mit der Axialscheibe (15) verbunden ist.

12. Spannvorrichtung nach Anspruch 3, wobei die Axialscheibe (14) zur Bildung der Verdrehsicherung (20b) eine Lasche (18) einschließt, die abgewinkelt, formschlüssig in die Ausnehmung (19) von dem Bord (13) des Einstellexzenters (12) eingreift.

13. Spannvorrichtung nach Anspruch 3, deren Axialscheibe (14) zur Bildung der Verdrehsicherung (20g) im Bereich des Außenumfangs einen axial vorstehenden Ansatz (31) aufweist, der endseitig einen schräg nach innen gerichteten Schenkel (32) bildet, welcher formschlüssig in die Ausnehmung (19) von dem Bord (13) des Einstellexzenters (12) eingreift.

14. Spannvorrichtung nach Anspruch 1, deren Axialscheibe (15) partiell einen nach innen abgewinkelten, in Richtung der Drehachse der Axialscheibe (15) ausgerichteten Schenkel (26) umfasst, der in die Ausnehmung (19) von dem Bord (13) des Einstellexzenters (12) ragt, zur Bildung der Verdrehsicherung (20c).

15. Spannvorrichtung nach Anspruch 1, bei der zwischen dem Einstellexzenter (12) und dem Betriebsexzenter (4) unmittelbar eine Verdrehsicherung vorgesehen ist.

16. Spannvorrichtung nach Anspruch 15, die als Verdrehsicherung (20e) zumindest einen dem Betriebsexzenter (4) oder dem Einstellexzenter (12) zugeordnetes Haltemittel umfasst, das in eine Aussparung oder Ausnehmung des zugeordneten weiteren Exzenters formschlüssig eingreift, zur Erzielung einer reib- bzw. drehmomentbegrenzten Verdrehsicherung.

17. Spannvorrichtung nach Anspruch 1, wobei eine drehmomentbegrenzte oder reibungsbegrenzte Verdrehsicherung (20a) zwischen dem Tragkörper (2) und dem Einstellexzenter (12) vorgesehen ist.

18. Spannvorrichtung nach Anspruch 1, die sowohl eine Verdrehsicherung (20d) als auch eine Drehrichtungssperre (35, 39) aufweist.

19. Spannvorrichtung nach Anspruch 1, deren Torsionsfeder (10) mit einem Federende (41) über einen Winkelring (41) an der Schildplatte (3) abgestützt ist, wobei der Winkelring (41) die Bauteile, Flansch (43), Hülsenabschnitt (45) und Scheibe (46) umfasst, die einstückig miteinander verbunden sind und dabei die Scheibe (46) gemeinsam mit einer Stirnseite (48) des Betriebsexzenters (4) einen Dichtspalt (47) axial begrenzt.

## Claims

1. Tensioning apparatus for a flexible drive, by way of which a drawing means (9), in particular a belt, can be pretensioned, the tensioning apparatus (1) comprising:
- a shielding plate (3) which is supported on a machine part (22) and forms a rotationally symmetrical loadbearing body (2);
- a setting eccentric (12) which can be inserted adjustably into the loadbearing body (2) of hollow-cylindrical design and has a hole which is offset with respect to an axis of symmetry and is intended to receive a fastening screw (23);
- an operating eccentric (4) which surrounds the loadbearing body (2), the said components being rotatable relative to one another via a sliding bearing bush (6);
- an anti-friction bearing (7) which is arranged on a circumferential face of the operating eccentric (4) and is enclosed on the outside by a running roller (8), on which the drawing means (9) is guided when the drawing means (9) is pretensioned;
- a spring means, configured as a torsion spring (10), which, arranged between the shielding plate (3) and the operating eccentric (4), ensures a non-positive support of the running roller (8) on the drawing means (9) when the drawing means (9) is pretensioned; **characterized in that**
- the loadbearing body (2) is fixed positively on the shielding plate (3) and the setting eccentric (12) is fastened rotatably to the loadbearing body (2);
- an axial disc (15) which is connected to an eccentric in a rotationally rigid manner is inserted between that end side of the operating eccentric (4) which faces away from the torsion spring (10) and a rim (13) which is connected to the setting eccentric (12);
- the tensioning apparatus (1) has an anti-rotation safeguard (20a - 20g), by way of which, in a delivery state of the tensioning apparatus (1), the operating eccentric (4) is positioned with respect to the setting eccentric (12) with friction and/or torque limitation.

2. Tensioning apparatus according to Claim 1 which is provided with a rotational-direction lock (35, 39) which makes a rotation of the setting eccentric (12) possible in only one direction.

3. Tensioning apparatus according to Claim 1, the axial disc (15) which is inserted between the operating eccentric (4) and the setting eccentric (12), is positionally fixed on the operating eccentric (4) and is produced from plastic forming an anti-rotation safeguard (20a - 20g) which is configured such that it can be deformed elastically during a rotation of the setting eccentric (12).

4. Tensioning apparatus according to Claim 3, the axial disc (15) having at least one projecting, elastically deformable elevation which, in the delivery state of the tensioning apparatus (1), engages into a recess (19) of the rim (13) of the setting eccentric (12).

5. Tensioning apparatus according to Claim 3, the axial disc (15) having at least one moulded-on lug or one moulded-on cam which interacts with the recess (19) of the setting eccentric (12) or with its rim (13).

6. Tensioning apparatus according to Claim 3, at least one axial pin of the axial disc (15) being fitted into the recess (19) of the rim (13) or into a hole of the setting eccentric (12), which at least one axial pin shears off in the case of a relative rotation of the setting eccentric (12) with respect to the operating eccentric (4).

7. Tensioning apparatus according to Claim 3, the axial disc (15) having at least one single-side impressed formation (14) which engages into the recess (19) of the setting eccentric (12), in order to form the anti-rotation safeguard (20d).

8. Tensioning apparatus according to Claim 3, the axial disc (15) of which, in order to form the anti-rotation safeguard (20f), has at least one axially projecting injection-moulded skin (33) of reduced wall thickness, which engages into the recess (19) of the rim (13).

9. Tensioning apparatus according to Claim 8, the injection-moulded skin (33) of the anti-rotation safeguard (20f) corresponding to a hole of the operating eccentric (4), and the position of the holes making it possible to centre the components setting eccentric (12) and operating eccentric (4) by means of a separate tool.

10. Tensioning apparatus according to Claim 3, the axial disc (15) having, as anti-rotation safeguard, a burr which can be deformed and/or sheared off and ensures the position of the operating eccentric (4) with respect to the setting eccentric (12) up to a defined frictional moment or torque.

11. Tensioning apparatus according to Claim 3 which, in order to form the anti-rotation safeguard, includes an axial disc (15) which has an injection-moulded seam which is designed geometrically to correspond to the recess (19) of the setting eccentric (12) and is connected to the axial disc (15) in a punctiform manner.

12. Tensioning apparatus according to Claim 3, the axial disc (14) including a tongue (18) in order to form the anti-rotation safeguard (20b), which tongue (18) engages in an angled-away and positively locking manner into the recess (19) of the rim (13) of the setting eccentric (12).

13. Tensioning apparatus according to Claim 3, the axial disc (14) of which, in order to form the anti-rotation safeguard (20g), has an axially projecting lug (31) in the region of the outer circumference, which lug (31) forms, on the end side, an obliquely inwardly directed limb (32) which engages positively into the recess (19) of the rim (13) of the setting eccentric (12).

14. Tensioning apparatus according to Claim 1, the axial disc (15) of which comprises partially a limb (26) which is angled away to the inside, is oriented in the direction of the rotational axis of the axial disc (15), and protrudes into the recess (19) of the rim (13) of the setting eccentric (12), in order to form the anti-rotation safeguard (20c).

15. Tensioning apparatus according to Claim 1, in which an anti-rotation safeguard is provided immediately between the setting eccentric (12) and the operating eccentric (4).

16. Tensioning apparatus according to Claim 15 which comprises, as anti-rotation safeguard (20e), at least one holding means which is assigned to the operating eccentric (4) or the setting eccentric (12) and engages positively into a cut-out or recess of the assigned further eccentric, in order to realize an anti-rotation safeguard with friction and/or torque limitation.

17. Tensioning apparatus according to Claim 1, an anti-rotation safeguard (20a) with torque or friction limitation being provided between the loadbearing body (2) and the setting eccentric (12).

18. Tensioning apparatus according to Claim 1 which has both an anti-rotation safeguard (20d) and a rotational-direction lock (35, 39).

19. Tensioning apparatus according to Claim 1, the torsion spring (10) of which is supported with one spring end (41) on the shielding plate (3) via an angle ring (41), the angle ring (41) comprising the components flange (43), sleeve section (45) and disc (46) which are connected integrally to one another, and in the process the disc (46) together with one end side (48) of the operating eccentric (4) delimiting a sealing gap (47) axially.

## Revendications

1. Dispositif de tensionnement pour un entraînement à moyen de traction, avec lequel un moyen de traction (9), notamment une courroie, peut être précontraint, et en l'occurrence le dispositif de tensionnement (1) comprend:
- une plaque de protection (3) supportée sur une partie de machine (22), qui forme un corps porteur (2) à symétrie de révolution;
- un excentrique d'ajustage (12) ajustable, inséré dans le corps porteur (2) configuré sous forme cylindrique creuse, qui présente un alésage décalé par rapport à un axe de symétrie et prévu pour recevoir une vis de fixation (23),
- un excentrique de fonctionnement (4) entourant le corps porteur (2), ces composants pouvant tourner les uns par rapport aux autres par le biais d'une douille de palier lisse (6);
- un palier à roulement (7) disposé sur une surface d'enveloppe de l'excentrique de fonctionnement (4), qui est entouré du côté extérieur par un galet de roulement (8) sur lequel est guidé le moyen de traction (9) lorsque le moyen de traction (9) est précontraint ;
- un moyen de ressort, réalisé sous forme de ressort de torsion (10), qui est disposé entre la plaque de protection (3) et l'excentrique de fonctionnement (4), et qui fournit un support par engagement par force du galet de roulement (8) sur le moyen de traction (9) lorsque le moyen de traction (9) est précontraint;
**caractérisé en ce que**
- le corps porteur (2) est fixé par engagement par correspondance géométrique sur la plaque de protection (3) et l'excentrique d'ajustage (12) est fixé de manière rotative sur le corps porteur (2) ;
- une rondelle axiale (15) est insérée entre le côté frontal de l'excentrique de fonctionnement (4) opposé au ressort de torsion (10) et un bord (13) connecté à l'excentrique d'ajustage (12), et est connectée de manière solidaire en rotation à un excentrique;
- le dispositif de tensionnement (1) présente une fixation anti-rotation (20a - 20g) avec laquelle, dans un état brut du dispositif de tensionnement (1), l'excentrique de fonctionnement (4) est positionné par rapport à l'excentrique d'ajustage (12) avec une limitation de couple de friction ou une limitation de couple de rotation.

2. Dispositif de tensionnement selon la revendication 1, qui est pourvu d'une barrière au sens de rotation (35, 39), qui permet une rotation de l'excentrique d'ajustage (12) uniquement dans un sens.

3. Dispositif de tensionnement selon la revendication 1, dans lequel la rondelle axiale (15) insérée entre l'excentrique de fonctionnement (4) et l'excentrique d'ajustage (12), fixée en position sur l'excentrique de fonctionnement (4), et fabriquée en plastique, forme une fixation anti-rotation (20a - 20g) qui est réalisée de manière à se déformer élastiquement lors d'une rotation de l'excentrique d'ajustage (12).

4. Dispositif de tensionnement selon la revendication 3, dans lequel la rondelle axiale (15) présente au moins un rehaussement saillant déformable élastiquement, qui vient en prise, dans l'état brut du dispositif de tensionnement (1), dans un évidement (19) du bord (13) de l'excentrique d'ajustage (12).

5. Dispositif de tensionnement selon la revendication 3, dans lequel la rondelle axiale (15) présente au moins un nez moulé par injection ou une came moulée par injection, qui coopère avec l'évidement (19) de l'excentrique d'ajustage (12) ou avec son bord (13).

6. Dispositif de tensionnement selon la revendication 3, dans lequel au moins une goupille axiale de la rondelle axiale (15) est adaptée dans l'évidement (19) du bord (13) ou dans un alésage de l'excentrique d'ajustage (12), qui se cisaille dans le cas d'une rotation relative du cylindre d'ajustage (12) par rapport à l'excentrique de fonctionnement (4).

7. Dispositif de tensionnement selon la revendication 3, dans lequel la rondelle axiale (15) présente, pour former la fixation anti-rotation (20d), au moins un marquage (14) unilatéral, venant en prise dans l'évidement (19) du cylindre d'ajustage (12).

8. Dispositif de tensionnement selon la revendication 3, dont la rondelle axiale (15) présente, pour former la fixation anti-rotation (20f), au moins une peau d'injection (33) d'épaisseur de paroi réduite, saillant axialement, qui vient en prise dans l'évidement (19) du bord (13).

9. Dispositif de tensionnement selon la revendication 8, dans lequel la peau d'injection (33) de la fixation anti-rotation (20f) coïncide avec un alésage de l'excentrique de fonctionnement (4) et la position des alésages permet un centrage des composants excentrique d'ajustage (12) et excentrique de fonctionnement (4) au moyen d'un outil séparé.

10. Dispositif de tensionnement selon la revendication 3, dans lequel la rondelle axiale (15) présente, en tant que fixation anti-rotation, un degré déformable et/ou cisaillable, qui fixe la position de l'excentrique de fonctionnement (4) par rapport à l'excentrique d'ajustage (12) jusqu'à un certain couple défini de friction ou de rotation.

11. Dispositif de tensionnement selon la revendication 3, qui inclut, pour la formation de la fixation anti-rotation, une rondelle axiale (15) qui présente un joint d'injection de forme géométrique correspondant à l'évidement (19) de l'excentrique d'ajustage (12), qui est connecté par point à la rondelle axiale (15).

12. Dispositif de tensionnement selon la revendication 3, dans lequel la rondelle axiale (15) inclut, pour la formation de la fixation anti-rotation (20b), une patte (18) qui vient en prise sous forme coudée, par engagement par correspondance géométrique dans l'évidement (19) du bord (13) de l'excentrique d'ajustage (12).

13. Dispositif de tensionnement selon la revendication 3, dont la rondelle axiale (14), pour former la fixation anti-rotation (20g), présente, dans la région de la périphérie extérieure, un épaulement saillant axialement (31) qui forme du côté de l'extrémité une branche (32) orientée en biais vers l'intérieur, qui vient en prise par engagement par correspondance géométrique dans l'évidement (19) du bord (13) de l'excentrique d'ajustage (12).

14. Dispositif de tensionnement selon la revendication 1, dont la rondelle axiale (15) comprend en partie une branche (26) coudée vers l'intérieur, orientée dans la direction de l'axe de rotation de la rondelle axiale (15), qui pénètre dans l'évidement (19) du bord (13) de l'excentrique d'ajustage (12), pour former la fixation anti-rotation (20c).

15. Dispositif de tensionnement selon la revendication 1, dans lequel on prévoit directement entre l'excentrique d'ajustage (12) et l'excentrique de fonctionnement (4) une fixation anti-rotation.

16. Dispositif de tensionnement selon la revendication 15, qui comprend, en tant que fixation anti-rotation (20e), au moins un moyen de retenue associé à l'excentrique de fonctionnement (4) ou à l'excentrique d'ajustage (12), qui vient en prise par engagement par correspondance géométrique dans un évidement ou une cavité de l'autre excentrique associé, pour obtenir une fixation anti-rotation avec une limitation de couple de friction ou une limitation de couple de rotation.

17. Dispositif de tensionnement selon la revendication 1, dans lequel une fixation anti-rotation (20a) avec une limitation de couple de friction ou une limitation de couple de rotation est prévue entre le corps porteur (2) et l'excentrique d'ajustage (12).

18. Dispositif de tensionnement selon la revendication 1, qui présente à la fois une fixation anti-rotation (20d) et une barrière au sens de rotation (35, 39).

19. Dispositif de tensionnement selon la revendication 1, dont le ressort de torsion (10) est supporté par une extrémité de ressort (41) par le biais d'une bague coudée (41) sur la plaque de protection (3), la bague coudée (41) entourant les composants bride (43), portion de douille (45) et rondelle (46), qui sont connectés d'une seule pièce les uns aux autres et en l'occurrence la rondelle (46) limite axialement une fente d'étanchéité (47) conjointement avec un côté frontal (48) de l'excentrique de fonctionnement (4).
